# FASCICULE DE BREVET EUROPEEN

(11) **EP 2 386 893 B1**
(45) Date de publication et mention de la délivrance du brevet: **30.11.2016**
(21) Numéro de dépôt: 11165183.2
(22) Date de dépôt: 06.05.2011
(51) Int. Cl.: G02B 6/44

(54) **Boîtier de raccordement de fibres optiques**
Anschlusskasten für Glasfaserkabel
Box for connecting optical fibres

(30) Priorité: 12.05.2010 FR 1053735
(43) Date de publication de la demande: 16.11.2011
(73) Titulaire: Nexans, 75008 Paris (FR)
(72) Inventeur: Monatlik, Jean-Christophe, 92150 Suresnes (FR); Renard, Xavier, 78410 Aubergenville (FR); Apere, Rodolphe, 78570 Andresy (FR)
(74) Mandataire: Gauer, Pierre

(56) Documents cités:
- EP-A1- 2 068 186
- WO-A2-2009/045689
- US-A1- 2008 131 132

## Description

La présente invention a pour objet un boîtier de raccordement de fibres optiques. Elle concerne en particulier un boîtier permettant de raccorder des fibres optiques d'un utilisateur à des fibres optiques issues d'un câble d'acheminement de fibres optiques.

Ce type de boîtier de raccordement de fibres optiques comprend généralement une face avant et une face arrière, la face avant étant munie d'un ou plusieurs raccords aptes à raccorder, par exemple mécaniquement, les fibres de l'utilisateur aux fibres issues d'un câble d'acheminement. La face avant comprend en outre typiquement au moins une cassette de lovage de fibres et de maintien d'épissures.

L'entrée du câble d'acheminement de fibres dans le boîtier se fait généralement par la face avant du boîtier.

Le câblage par la face avant du boîtier permet une installation intuitive pour l'installateur qui installe d'abord le boîtier puis ensuite le câble. Toutefois, une fois le boîtier câblé en usine, il n'est pas possible de faire pivoter le boîtier et de choisir l'entrée de câble lors de l'installation.

Une solution a été développée en utilisant un boîtier de forme carrée, comprenant une casette pouvant être montée dans différentes positions sur le corps de boîtier. Le corps de boîtier est ainsi pivoté dans la position souhaitée et la cassette est clipsée dans la position requise.

Cette solution est toutefois mal adaptée à un boîtier pré-cablé, car dans ce cas, il faut faire pivoter la cassette et désinstaller partiellement la fibre destinée à l'utilisateur pour ensuite la réinstaller. En outre, si le boîtier doit comprendre plusieurs raccords, le boîtier devient rectangulaire et cette solution ne peut plus s'appliquer.

L'invention vise à remédier à ces inconvénients.

L'invention propose un boîtier de raccordement de fibres optiques permettant une installation simplifiée du boîtier dans différentes positions, en particulier lorsque le boîtier est pré-câblé et/ou qu'il comprend plusieurs raccords.

L'invention a ainsi pour objet un boîtier de raccordement de fibres optiques, comprenant une partie avant et une partie arrière, la partie avant comprenant au moins un raccord apte à raccorder des fibres d'un utilisateur à des fibres issues d'un câble d'acheminement de fibres optiques.

Le boîtier selon l'invention comprend au moins une entrée de câble située dans la partie avant et au moins une entrée de câble située dans la partie arrière, ainsi qu'une zone permettant le passage du câble depuis la partie arrière vers la partie avant.

Le boîtier peut comprendre une pluralité d'entrées de câble situées dans la partie arrière et/ou une pluralité d'entrées de câble situées dans la partie avant.

Grâce à la pluralité d'entrées de câble, il est possible de fixer le boîtier dans la position souhaitée, l'entrée du câble dans le boîtier pouvant être choisie parmi les différentes entrées.

Le câble peut être pré-installé. Le câble peut entrer dans le boîtier via une entrée de la partie arrière ou via une entrée de la partie avant.

La partie avant et/ou la partie arrière comprennent avantageusement des moyens de guidage du câble vers la ou les entrées de câble, de préférence un élément de guidage par entrée de câble. Les moyens de guidage peuvent être aptes à guider le câble le long des côtés de la partie arrière et/ou de la partie avant du boîtier. Les moyens de guidage de la partie arrière peuvent être disposés par exemple sur les côtés situés entre l'entrée de câble et la zone permettant le passage du câble depuis la partie arrière vers la partie avant, ou au voisinage de ces côtés, de manière à ce que le câble soit guidé le long des côtés situés entre l'entrée de câble et ladite zone de passage.

Le boîtier peut comprendre au moins quatre entrées de câble par partie du boîtier. Le boîtier peut en particulier comprendre une ou plusieurs entrées de câble sur chaque côté de la partie arrière et/ou sur chaque côté de la partie avant. Les quatre entrées de câble peuvent être disposées de façon à ce que l'angle entre deux entrées de câble consécutives soit sensiblement égal à 90°.

Le boîtier peut comprendre quatre raccords.

La partie avant peut comprendre au moins une cassette de lovage de fibres et de maintien d'épissures.

D'autres caractéristiques et avantages de la présente invention apparaîtront plus clairement à la lecture de la description suivante donnée à titre d'exemple illustratif et non limitatif et faite en référence aux dessins annexés sur lesquels :
- les figures 1 et 2 sont des vues de face de la partie arrière d'un boîtier de raccordement de fibres optiques selon l'invention, et
- la figure 3 est une vue de face de la partie avant du boîtier.

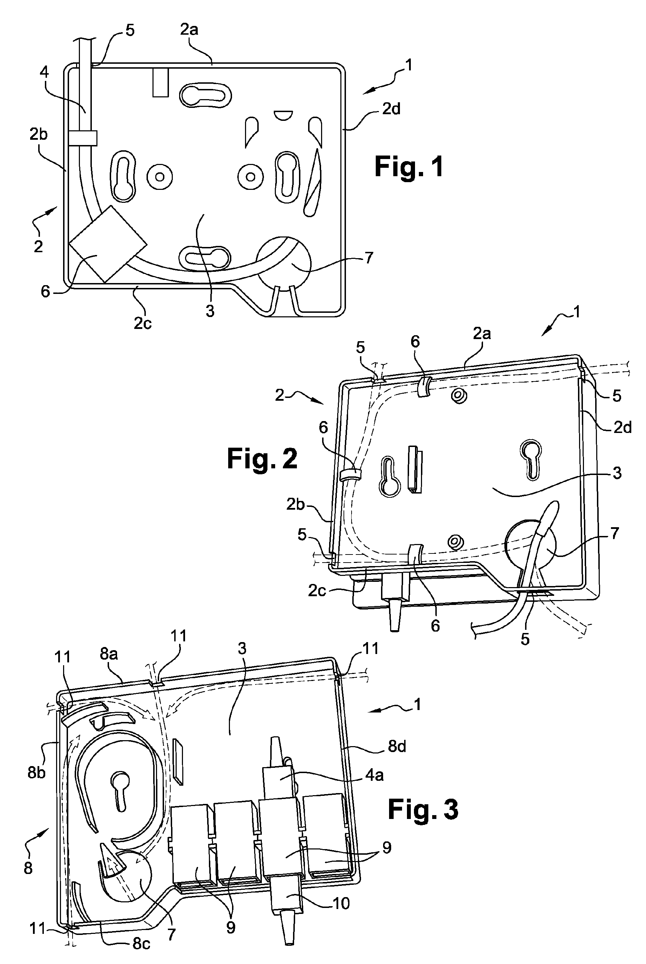

Le boîtier 1, tel qu'illustré à la figure 1, comprend une partie arrière 2, également appelée face arrière. La partie arrière 2 est de section rectangulaire et comprend quatre bords 2a,2b,2c,2d. La partie arrière 2 est délimitée par une paroi centrale 3 qui délimite également la partie avant du boîtier 1, située de l'autre côté du boîtier 1. Le boîtier 1 est ainsi constitué d'une partie avant et d'une partie arrière 2, séparées et délimitées par une paroi centrale 3.

Un câble 4 d'acheminement de fibres optiques entre dans le boîtier 1 par une entrée 5 de câble située dans un bord 2a de la partie arrière 2. Le câble 4 est enroulé à l'intérieur de la partie arrière 2. Des éléments de guidage 6 sont aptes à guider le câble 4 d'acheminement le long des côtés 2b,2c de la partie arrière 2. Le câble 4 peut ensuite relié à la face avant du boîtier 1 via par exemple une ouverture 7 située dans la paroi 3.

La figure 2, sur laquelle les éléments identiques à ceux de la figure 1 portent les mêmes références, illustre différentes entrées 5 possibles du câble 4. Le boîtier 1 peut ainsi comprendre quatre entrées 5 de câble, chaque entrée 5 étant située dans un des quatre côtés 2a,2b,2c,2d de la bordure de la partie arrière 2 du boîtier 1. Chaque côté 2a,2b,2c,2d de la partie arrière 2 peut comprendre plusieurs entrées 5 de câble.

On peut ainsi choisir n'importe quelle position modulo 90° du boîtier 1. Le câble 4 est avantageusement pré-installé, c'est-à-dire que le câble 4 est pré-raccordé à au moins un raccord situé dans la partie avant du boîtier 1, chaque raccord étant apte à raccorder des fibres d'un utilisateur aux fibres issues du câble 4 d'acheminement. On dit dans ce cas que le boîtier 1 est pré-câblé. Le développement récent des programmes FTTH, qui implique des interventions plus nombreuses dans les boîtiers de raccordement, accroît cette demande de boîtier pré-câblé. FTTH est l'abréviation du terme anglais « Fiber To The Home », signifiant littéralement en français « fibre jusqu'au foyer ». Il s'agit du nom d'une technologie visant à remplacer les technologies DSL (Digital Subscriber Line en langue anglaise) en installant de la fibre optique jusque chez l'abonné.

Ainsi, grâce aux entrées 5 situées dans chacun des bords 2a,2b,2c,2d de la partie arrière 2 du boîtier 1, il est possible de faire pivoter le boîtier 1 pré-câblé jusqu'à la position souhaitée. Le câble 4 d'acheminement issu de l'ouverture 7 est inséré dans les éléments de guidage 6, puis est dirigé jusqu'à l'entrée 5 de câble correspondant au pivotement choisi. Le boîtier 1 peut ensuite être retourné, plaqué au mur et fixé.

Le boîtier 1 peut ainsi être fixé dans la position souhaitée, sans qu'il soit nécessaire de décâbler le boîtier 1. On peut également choisir de quel côté le câble 4 entre dans le boîtier 1. Que le boîtier 1 soit seulement fixé au mur dans le cas d'un boîtier pré-câblé en usine ou que le boîtier 1 soit installé sur site, le boîtier 1 conserve son aptitude à la rotation, ce qui est utile pour faire face à la réalité du terrain, sans entraîner de perte de temps pour l'installateur.

La figure 3 illustre la partie avant 8 du boîtier 1. Comme expliqué ci-dessus, la partie avant 8 est délimitée par la paroi centrale 3. La partie avant 8 peut comprendre quatre raccords 9, par exemple des raccords mécaniques, et un support de cassette de lovage de fibres et de maintien d'épissures.

Chaque raccord 9 est destiné à accueillir une ou plusieurs fibres optiques du câble 4 d'acheminement via un connecteur 4a inséré dans la partie supérieure du raccord 9. Les fibres optiques de l'utilisateur peuvent ensuite être raccordées aux fibres optiques du câble 4 d'acheminement via des connecteurs 10 insérés dans la partie inférieure des raccords 9.

Le boîtier 1 peut également comprendre des entrées de câble 11 situées dans la partie avant 8 du boîtier 1, par exemple sur chaque côté 8a,8b,8c,8d de la bordure de la partie avant 8. Les entrées de câble 11 permettent de conserver un câblage intuitif par la face avant 8.

## Revendications

1. Boîtier (1) de raccordement de fibres optiques, comprenant une partie avant (8) et une partie arrière (2) séparées et délimitées par une paroi centrale (3), la partie avant (8) comprenant au moins un raccord (9) apte à raccorder des fibres d'un utilisateur à des fibres issues d'un câble (4) d'acheminement de fibres optiques, ainsi qu'une zone (7) située dans la paroi centrale (3) et permettant le passage du câble depuis la partie arrière (2) vers la partie avant (8), **caractérisé en ce que** le boîtier (1) comprend une pluralité d'entrées (5) de câble-ménagées dans les côtés (2a-2d) de la partie arrière (2) et une pluralité d'entrées (11) de câble ménagées dans les côtés (8a-8d) de la partie avant (8), lesdites entrées étant respectivement agencées sur les bords de la partie arrière (2) ou de la partie avant (8) de telle façon que le câble d'acheminement 4 puisse être introduit dans le boitier (1) par l'un ou l'autre des côtés (2a-2d, 8a-8d) de la partie arrière (2) ou de la partie avant (8), de façon à faciliter le montage du boitier sur le mur sur lequel il est destiné à être monté.

2. Boîtier (1) selon la revendication 1, **caractérisé en ce que** le câble (4) est pré-installé, le câble (4) entrant dans le boîtier (1) via une entrée (5) de la partie arrière (2).

3. Boîtier (1) selon la revendication 1 ou 2, **caractérisé en ce que** la partie avant (8) et/ou la partie arrière (2) comprennent des moyens de guidage (6) du câble (4) vers la ou les entrées (5,11) de câble.

4. Boîtier (1) selon l'une des revendications 1 à 3, **caractérisé en ce qu'**il comprend une ou plusieurs entrées (5,11) de câble sur chaque côté (2a,2b,2c,2d) de la partie arrière (2) et/ou sur chaque côté (8a,8b,8c,8d) de la partie avant (8).

5. Boîtier (1) selon l'une des revendications 1 à 4, **caractérisé en ce qu'**il comprend quatre raccords (9).

6. Boîtier (1) selon l'une des revendications 1 à 5, **caractérisé en ce que** la partie avant (8) comprend au moins une cassette de lovage de fibres et de maintien d'épissures.

## Patentansprüche

1. Anschlusskasten (1) für Glasfaserkabel, umfassend einen vorderen Teil (8) und einen hinteren Teil (2), die mittels einer zentralen Wand (3) getrennt und begrenzt sind, wobei der vordere Teil (8) mindestens einen Anschluss (9) umfasst, der imstande ist, Fasern eines Benutzers mit Fasern eines Beförderungskabels (4) für Glasfasern zu verbinden, sowie eine Zone (7), die sich in der zentralen Wand (3) befindet und den Durchgang des Kabels vom hinteren Teil (2) zum vorderen Teil (8) erlaubt, **dadurch gekennzeichnet, dass** der Kasten (1) eine Vielzahl von Kabeleingängen (5) umfasst, die an den Seiten (2a-2d) des hinteren Teils (2) ausgebildet sind, und eine Vielzahl von Kabeleingängen (11), die an den Seiten (8a-8d) des vorderen Teils (8) ausgebildet sind, wobei die Eingänge jeweils an den Rändern des hinteren Teils (2) oder des vorderen Teils (8) ausgebildet sind, so dass das Beförderungskabel (4) in den Kasten (1) durch die eine oder die andere der Seiten (2a-2d), 8a-8d) des hinteren Teils (2) oder des vorderen Teils (8) einführbar ist, um die Montage des Kastens an der Wand, an der er montiert werden soll, zu erleichtern.

2. Kasten (1) nach Anspruch 1, **dadurch gekennzeichnet, dass** das Kabel (4) vorinstalliert ist, wobei das Kabel (4) in den Kasten (1) über einen Eingang (5) des hinteren Teils (2) eintritt.

3. Kasten (1) nach Anspruch 1 oder 2, **dadurch gekennzeichnet, dass** der vordere Teil (8) und/oder der hintere Teil (2) Führungsmittel (6) des Kabels (4) zu dem oder den Kabeleingängen (5, 11) umfassen.

4. Kasten (1) nach einem der Ansprüche 1 bis 3, **dadurch gekennzeichnet, dass** er einen oder mehrere Kabeleingänge (5, 11) auf jeder Seite (2a, 2b, 2c, 2d) des hinteren Teils (2) und/oder auf jeder Seite (8a, 8b, 8c, 8d) des vorderen Teils (8) umfasst.

5. Kasten (1) nach einem der Ansprüche 1 bis 4, **dadurch gekennzeichnet, dass** er vier Anschlüsse (9) umfasst.

6. Kasten (1) nach einem der Ansprüche 1 bis 5, **dadurch gekennzeichnet, dass** der vordere Teil (8) mindestens eine Faserspleiß- und Spleißhaltekassette umfasst.

## Claims

1. A box (1) for connecting optical fibers, comprising a front part (8) and a back part (2) separated and defined by a central wall (3), the front part (8) comprising at least one connector (9) able to connect fibers of a user to fibers from a routing cable (4) for optical fibers, as well as a zone (7) situated in the central wall (3) and allowing the passage of the cable from the back part (2) toward the front part (8), **characterized in that** the box (1) comprises a plurality of cable inputs (5) arranged in the sides (2a-2d) of the back part (2) and a plurality of cable inputs (11) arranged in the sides (8a-8d) of the front part (8), said inputs respectively being arranged on the edges of the back part (2) or the front part (8) such that the routing cable (4) can be inserted into the box (1) through one or the other of the sides (2a-2d, 8a-8d) of the back part (2) or the front part (8), so as to facilitate the assembly of the box on the wall on which it is intended to be mounted.

2. The box (1) according to claim 1, **characterized in that** the cable (4) is preinstalled, the cable (4) entering the box (1) via an input (5) of the back part (2).

3. The box (1) according to claim 1 or 2, **characterized in that** the front part (8) and/or the back part (2) comprises means (6) for guiding the cable (4) toward the cable input(s) (5, 11).

4. The box (1) according to one of claims 1 to 3, **characterized in that** it comprises one or several cable inputs (5, 11) on each side (2a, 2b, 2c, 2d) of the back part (2) and/or on each side (8a, 8b, 8c, 8d) of the front part (8).

5. The box (1) according to one of claims 1 to 4, **characterized in that** it comprises four connectors (9).

6. The box (1) according to one of claims 1 to 5, **characterized in that** the front part (8) comprises at least one cassette for coiling fibers and maintaining splices.
